# EUROPEAN PATENT APPLICATION

(11) **EP 2 127 747 A1**
(43) Date of publication of application: **02.12.2009**
(21) Application number: 08009225.7
(22) Date of filing: 20.05.2008
(51) Int. Cl.: B01L 3/00, F16K 99/00

(54) **Microfluid analytical device comprising a valve with swellable material**

(71) Applicant: F.HOFFMANN-LA ROCHE AG, 4070 Basel (CH); Roche Diagnostics GmbH, 68305 Mannheim (DE)
(72) Inventor: Glauser, Michael, 6343 Rotkreuz (CH); Sarofim, Emad, 6332 Hagendorn (CH); Kopp, Martin, 6330 Cham (CH)
(74) Representative: Schaad, Balass, Menzl & Partner AG

(57) **Abstract**

The inventive valve (10) comprises a fluidic channel (12) having an inlet section (16), an outlet section (18) and an actuating section (20) arranged between the inlet (16) and the outlet section (18). In the actuating section (20) a valve actuator (22) containing a swellable material (32) is provided. In an open state of the valve (10) a fluid is conducted from the inlet section (16) to the outlet section (18) through an actuator-free passage (28) in the actuating section (20). A transition from the open state to a closed state of the valve (10) is effected automatically and exclusively by contact of the swellable material (32) with the fluid to be controlled.

## Description

The invention relates to microfluidic analytical device comprising a valve for fluidic channels, a valve for fluidic channels in microfluidic analytical devices comprising a swellable material, a multi-arrangement of such valves, a microvessel arrangement in a microfluidic analytical device, preferably for nucleic acid testing, more preferably for polymerase chain reaction (PCR) processes, into which a liquid is delivered through microfluidic channels comprising such a valve and a method for production of such valves.

Microfluidic devices, e.g. used in the analysis and synthesis of reagents, are frequently provided with valves to open and close fluidic paths. For example in nucleic acid testing (NAT), in particular in PCR processes, fluidic channels conducting liquid components into microvessels have to be closed prior to further steps e.g. prior to thermal cycling steps.

Valves in microfluidic devices are in general well-known. A review article regarding such valves can be found for instance in "A review of microvalves", Journal of Micromechanics and Microengineering, 16 (2006), R13 - R39. In chapter 3.2.1 of the review microvalves comprising hydrogels are described. Therein listed hydrogel-based microvalves are controlled by changes in the pH-value, the glucose concentration, the temperature, the electrical field, the light exposure, the concentration of carbohydrates or the presence of antigens.

Similar to hydrogels, superabsorbent polymers are water-containing but water-insoluble networks of polymer chains. While hydrogels are able to absorb around 30% of their own mass of water, superabsorbent polymers absorb water up to a multiple of their own mass.

WO 2006/0169339 A1 discloses a micro valve device which comprises a hydrogel. The hydrogel swells and shrinks depending on the concentration of cations and anions. The cations and anions are produced directly in the fluid flow to be controlled by means of electrolyses.

US 2006/089252 A1 describes liquid valves using reactive or responsive materials. In these liquid valves porous structures, like pellets, micro- or nano-bead powders made of water or acrylamid hydrogels, swell due to a contact with the fluid to be controlled and close the valves. The difficult process for production of such valves includes steps in which the fluidizied hydrogels are filled into valve bodies and dried afterwards. The porous structures are arranged directly within a fluidic channel of the liquid valves and fill - even in an open state of the liquid valves - the entire cross section of the fluidic channel. Since the liquid valves do not provide any material-free passage to the fluid to be controlled the flow resistance of these liquid valves is relatively high also in their open state.

It is an object of the present invention to provide a microfluidic analytical device with a valve of simple construction to reliably control a fluid flow in the microfluidic analytical device. A further object of the present invention is to develop an easy and cost efficient method for production of such valves.

The inventive microfluidic analytical device comprises an analytical section and a valve. The term 'analytical section' relates to section of a microfluidic device which receives a liquid comprising an analyte. Said liquid comprising an analyte is processed in said analytical section, thus obtaining an analytical result that can be used in diagnosis of disease or in monitoring of treatments. Said analytical section may comprise one or more containers, preferably one or more microvessels which can receive small volumes of liquids. Said analytical section may be reversibly or irreversibly connected to the fluid channel of the microfluidic analytical device, or may be an integral part of said device.

Said valve for microfluidic analytical devices comprises a fluidic channel having an inlet section, an outlet section and an actuating section which is arranged between the inlet and the outlet section. In the actuating section a valve actuator is provided which allows in an open state of the valve to conduct a fluid from the inlet section to the outlet section through an actuator-free passage in the actuating section. The valve actuator comprises a swellable material, preferably a superabsorbent polymer applied as a complex matrix, which upon contact with the fluid to be controlled automatically and exclusively closes the actuator-free passage and blocks any further transfer of the fluid in a closed state of this valve. The term 'complex matrix' relates to a mixture of a superabsorbent (SAP) with thermoplastic polymers, softening agents, tacktifiers and/or additional ingredients, such as detergents. A preferred mixture comprises an SAP, and a thermoplastic polymer. A more preferred mixture comprises an SAP, a thermoplastic polymer and a softening agent. Such compositions are described e.g. in US 6,534,572 and US 6,849,672.

During contact of the swellable material with the fluid a particular amount of the fluid is absorbed so that the swellable material swells under volume expansion into the actuator-free passage and finally disables a further transfer of the fluid from the inlet section to the outlet section.

The inventive valve does not require any external control mechanism to initiate the transition from an open state to a closed state of the valve. In fact, the valve is configured as a self-closing valve that is, only the fluid to be controlled is used to initiate closing of the valve. Therefore, no auxiliary fluid or activator has to be provided.

Moreover, because of its simple construction without any additional mechanically movable or electrical components the inventive valve has an increased reliability and can be produced at low cost. The inventive valve requires only a small amount of space such that a miniaturization is favorably supported and a high number of valves per unit area can be arranged.

In particular with respect to the last mentioned feature it is a further aspect of the present invention that a multi-arrangement of the inventive valves is provided in which a number of these valves are arranged in a serial and / or parallel flow connection. If the connected valves have different transition times for a transition of the valve from an open state to a closed state complex time-controlled flow path circuits can be formed.

According to another aspect of the present invention there is provided a microvessel arrangement in a microfluidic analytical device in which the liquid is delivered to a microvessel through microfluidic channels having such an inventive valve. Depending on the absorption of fluid by the swellable material and therefore on the time of contact between the fluid and the swellable material only a predetermined amount of the fluid is transferred to the microvessel.

According to still another aspect of the present invention there is provided also a method for production of such valves. In a particularly preferred embodiment of the production method the valve actuator comprising the swellable material is manufactured together with a valve body in a multi-component injection molding process, preferred in a two-component injection molding process. Usage of injection molding process allows a very cost efficient mass production of the inventive valve.

Further preferred embodiments are endowed with features contained in the depending claims. Particularly preferred embodiments of the present invention are described below and illustrated in the drawings, in which, purely schematically:
- Fig. 1: shows in perspective view a first embodiment of the inventive valve in an open state, where a valve actuator of the valve is arranged in an actuator section between an inlet section and an outlet section of a fluidic channel;
- Fig. 2: shows in a perspective view the embodiment presented in Fig. 1 in a closed state of the valve;
- Fig. 3: shows in a perspective view a further preferred embodiment of the inventive valve in which the valve actuator is arranged in a U-shaped recess of a valve body surrounding the fluid channel;
- Fig. 4: shows in perspective view a further embodiment in which the valve actuator comprises two separate actuator elements which are arranged at different positions in the actuating section;
- Fig. 5: shows in a sectional view a further embodiment of the valve in an open state in which the valve actuator is arranged in a cylindrical recess around a central actuator-free passage for transferring the fluid from the inlet section through the actuating section to the outlet section open to a spherical microvessel;
- Fig. 6: shows in a sectional view the arrangement presented in Fig. 5 in a closed state of the valve in which the actuator-free passage is closed by the valve actuator to block a further transfer of the fluid from the inlet section to the outlet section; and
- Fig. 7: shows in block diagram a multi-arrangement of the inventive valves.

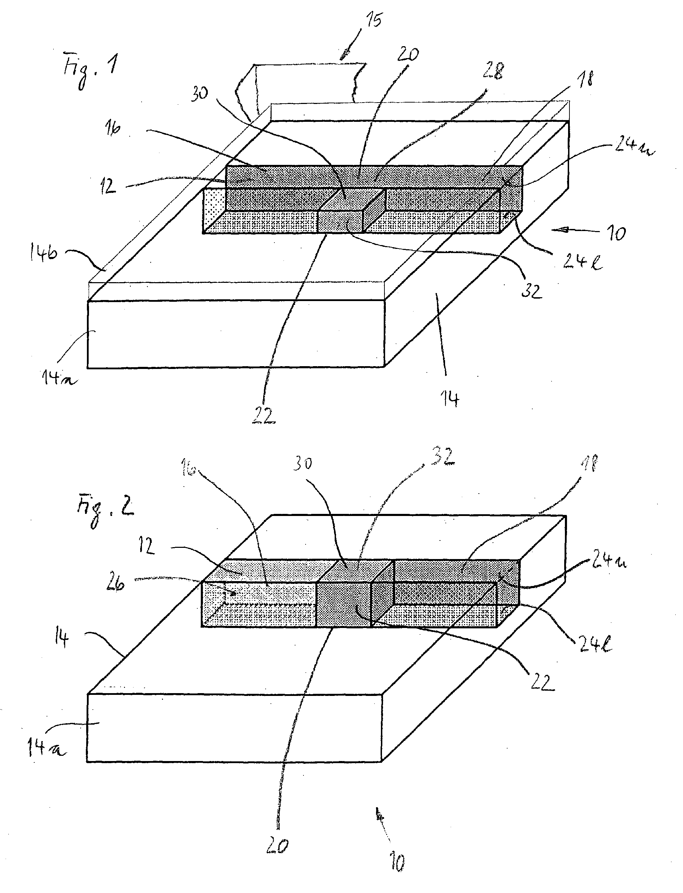

As shown in Fig. 1 the inventive valve 10 comprises a fluidic channel 12 formed in a valve body 14. The valve body 14 in the described preferred embodiments can be designed as one element or may consist of two or more elements, e.g. a base element 14a and a top cover element 14b. The base element 14a and the top cover element 14b can be of mirror imaged construction or the top cover element 14b is a simple plane-parallel slab as shown in Fig. 1. The valve body 14 and the entire valve 10, respectively, are arranged in a microfluidic analytical device 15. Although the valve 10 is constructed particularly for usage in microfluidic analytical devices 15 it may be also incorporated in other types of devices to control microfluidic flows.

The fluidic channel 12 is subdivided in an inlet section 16, an outlet section 18 and an actuating section 20 which is arranged between the inlet section 16 and the outlet section 18. In the actuating section 20 a valve actuator 22 is located which extends from an inner lower wall 241 of the fluidic channel 12 into the interior of the fluidic channel 12 up to about half of the height of the fluidic channel 12.

In an open state of the valve 10 a fluid 26 - shown for instance in Fig. 2, 5 and 6 - is conducted through the fluidic channel 12 from the inlet section 16 to the outlet section 18 via the actuating section 20. In the actuating section 20 an actuator-free passage 28 is formed between an inner upper wall 24u of the fluidic channel 12 and a facing upper boundary 30 of the valve actuator 22. Beside the fluid 26 to be conducted the actuator-free passage 28 is in the open state free from any material also from any porous material. In other words, a porous channel in a material of the valve actuator 22 is not regarded as actuator-free passage 28.

The valve actuator 22 comprises a swellable material 32 which swells upon absorption of an amount of the fluid 26 to be conducted through the fluidic channel 12. In the preferred embodiments described the valve actuator 22 consists only of the swellable material 32. The swellable material 32 is a hydrogel, in particular a superabsorbent polymer (superabsorbent), preferred a superabsorbent polymer which is applied as a complex matrix, more preferred a poly-acrylic acid derivative. In a further preferred embodiment the swellable material 32 is a thermoplastic polymer such that the swellable material 32 and the valve actuator 22, respectively, can be produced in an injection molding process. Alternative materials are discussed e.g. in US 6,534,572 or US 6,849,672. The swelling grade and swelling velocity of the swellable material 32 can be influenced by adaptation of the chain length, the grade of neutralization, the medium used for neutralization and the degree of cross linking of the polymeric material. For example, the material with the trade name "NW 1100" (H.B. Fuller, St. Paul, USA) has been proved to comprise appropriate properties for usage as swellable material 32.

Upon contact of the swellable material 32 with the fluid 26 and a therewith connected absorption of an amount of the fluid 26 by the swellable material 32 the swellable material 32 swells under volume expansion at least in the direction of facing walls in the fluidic channel 12 to narrow the actuator-free passage 28. Finally, the swollen swellable material 32 blocks the flow of the fluid 26 from the inlet section 16 to the outlet section 18 completely because of the closure of the actuator-free passage 28. The volume increase of the swellable material 32 amounts from about 30% up to a manifold of its own weight.

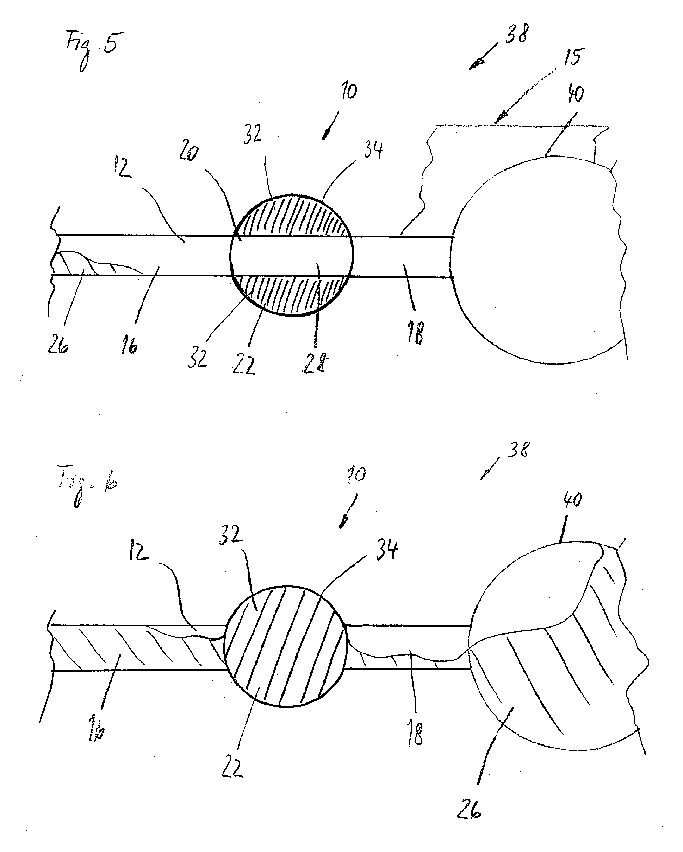

The final situation shown in Fig. 2 and Fig. 6 in which caused by swelling of the swellable material 32 the valve actuator 22 has filled completely a cross section of the fluidic channel 12 in the actuating section 20 and thus entirely closed the actuator-free passage 28 is referred to as closed state of the valve 10. In other words, in contrast to the open state of the valve 10 in its closed state the valve 10 does not allow flowing of the fluid 26 from the inlet section 16 to the outlet section 18. The swollen swellable material 32 forms in the closed state of the valve 10 a sealing compound.

Because of the applied swellable material 32 a transition from the open state to the closed state of the valve 10 is controlled automatically and exclusively by contact of the swellable material 32 with the fluid 26 to be controlled. Besides delivery of the fluid 26 to the actuating section 20 the therewith inevitably connected absorption of a portion of the fluid 26 by the swellable material 32 no external intervention to initiate the transition from the open state to the closed state is required. Since the inventive valve 10 does not encompass mechanically movable or electrical components to initiate or to complete the transition of the valve 10 to the closed state no additional adjustment or aligning procedures are required and the reliability of the valve is highly increased.

The transition time from the open state to the closed state of the valve 10 is predetermined by the swelling properties of the swellable material 32, by the size and the shape of a contact area between the swellable material 32 and the fluid 26, and by the geometry of the actuating section 20. The transition time is determined to allow the required filling of a downstream connected vessel by transferring the correct amount of fluid 26 through the actuating section 20 and to close the valve 10 rapidly after transferring the correct amount of fluid 26. Typical transition times of the inventive valve 10 range from 1 sec to 30 min, preferably from 1 sec to 1 min or 5 min, more preferred from 10 sec to 1 min. By adaptation of the above mentioned parameters other transition times are of course possible.

It should be mentioned that the swellable material 32 has an appropriate mechanical stability also in its swollen condition in the closed state of the valve 10. In this condition the swellable material 32 guarantees a liquid-tight closure of the valve 10 at the given process pressure, process temperature and - if required - during a predetermined number of temperature cycles. Furthermore, the swellable material 32 is resistant to washing out processes caused by the fluid 26 and is provided with a chemical compatibility to the specific application or assay in which the valve 10 is used. It should be mentioned that the chemical compatibility of the inventive valve 10 is improved compared to valves having a swellable material of porous structure since the surface-to-volume ratio of the latter is much greater causing a higher probability of unspecific adsorptions on surfaces of the porous structure. Thus in the analytical device 15 comprising the inventive valve 10 improved (lower) detection limits are feasible because of the lower unspecific adsorption probability in the valve 10.

Preferably, the swellable material 32 is irreversibly bonded to the valve body 14, in particular to a valve body 14 made of a thermoplastic rigid material selected from the group of polypropylene, polyethylene, polystyrene, polycarbonate and polymethylmethacrylate.

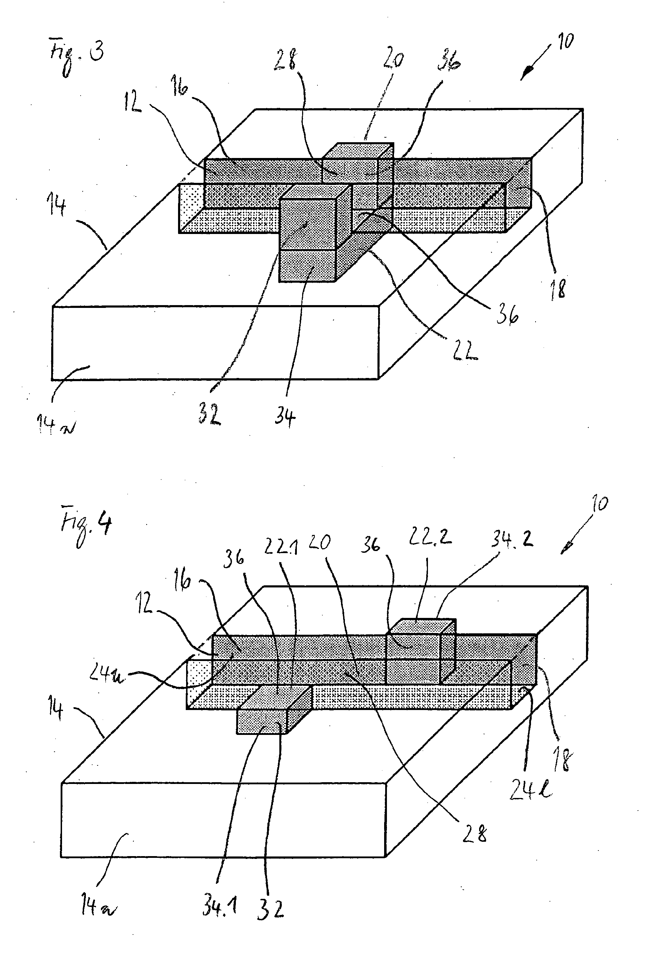

In Fig. 3 - 5 further preferred embodiments having different arrangements of valve actuators 22 are presented. In these embodiments the swellable material 32 is arranged in a recess 34 and recesses 34, respectively, in such a way that in the open state of the valve 10 inner actuating walls 36 formed by the swellable material 32 extend flush with adjacent walls of the inlet section 16 and the outlet section 18. In order to further minimize the flow resistance in the valve 10 in its open state the actuating section 20 is provided with a cross section which corresponds substantially to the cross section of at least one of the inlet section 16 and the outlet section 18. Preferably, the fluidic channel 12 comprises in the open state of the valve 10 an at least substantially constant cross section over its entire length.

In the embodiment shown in Fig. 3 the fluidic channel 12 is provided with a U-shaped recess 34 in which the swellable material 32 of the valve actuator 22 is housed. The inner actuating walls 36 formed by the swellable material 32 extend flush with adjacent walls of both, the inlet section 16 and the outlet section 18. The depth and specific shape of the recess 34 can be adapted for example to the particularly used swellable material 32, the required transition time to close the valve 10 and the cross sections of the inlet channel 16 and the outlet channel 18. In addition to the U-shaped recess 34 also a construction having a radially circumferential recess 34 is possible. In those embodiments the whole cross section of the fluidic channel 12 in the actuating section 20 is lined with the swellable material 32.

It is also possible to provide the fluidic channel 12 in the actuating section 20 with more than one recess 34 as shown for instance in the embodiment of Fig. 4. Here, two spaced, laterally arranged recesses 34.1, 34.2 for receiving two valve actuators 22.1, 22.2 each comprising swellable material 32 are formed. The recess 34.1 is arranged below the inner lower wall 241 of the fluidic channel 12 while the recess 34.2 extends over the entire height of the fluidic channel 12 in a side wall of the actuating section 20. In this embodiment the actuating section 20 extends from an inlet-sided first valve actuator 22.1 to an outlet-sided second valve actuator 22.2. In the closed state of the valve 10 the double-arrangement of valve actuators 22.1, 22.2 forms a safety closure in which the fluid 26 (not shown) is blocked at two positions in the actuating section 20. Of course it is also possible to provide the valve 10 with only one of the recesses 34.1, 34.2 and the corresponding valve actuator 22.1 or 22.2

Fig. 5 and 6 present a microvessel arrangement with a further embodiment of the inventive valve 10 as used for instance in PCR processes. In the shown arrangement the free end of the outlet section 18 of the fluidic channel 12 opens to a cylindrical microvessel 40. The plane-parallel slab used as top cover element 14b is not shown. The valve actuator 22 comprising the swellable material 32 is arranged in the also cylindrical shaped recess 34. In the open state of the valve 10 - shown in Fig. 5 - the valve actuator 22 is shaped correspondingly to the recess 34 and an actuator-free passage 28 extending diametrically through the valve actuator 22 is formed. In this way the swellable material 32 is lining nearly the complete fluidic channel 12 within the actuating section 20.

Upon contact of the swellable material 32 with the fluid 26 the transition of the valve 10 from the open state to the closed state of valve 10 is initiated. The finally reached closed state of the embodiment shown in Fig. 5 is presented in Fig. 6. The swollen swellable material 32 has closed the actuator-free passage 28 completely and impedes a further flow of fluid 26 via the outlet section 18 to the microvessel 40.

In the embodiment shown in Fig. 5 and 6 the fluidic channel 12 has a width of about 0,5 mm and a depth of about 0,45 mm each measured at right angles to the longitudinal axis of the fluidic channel 12. The diameter of the microvessel 42 amounts to 2,5 mm. The shown base element 14a of the valve body 14 is made of polypropylene and produced in an injection molding process. As swellable material 32 the above mentioned material "NW 1100" was used. To place the swellable material 32 in the recess 34 the thermoplastic material was fluidized by means of heat and then molded in the recess 34. A transition time from the open state to the closed state of the valve 10 of about 20 minutes has been observed. Transition times shorter than 4 minutes could be achieved in smaller configurations of the fluidic channel 12. The inventive valve 10 proved to be of sufficient stability to guarantee a closed state during 50 thermo cycles between 60°C and 90°C.

The above described embodiments of the inventive valve 10 are particularly configured for a usage as close-once valves as often required in analytical devices.

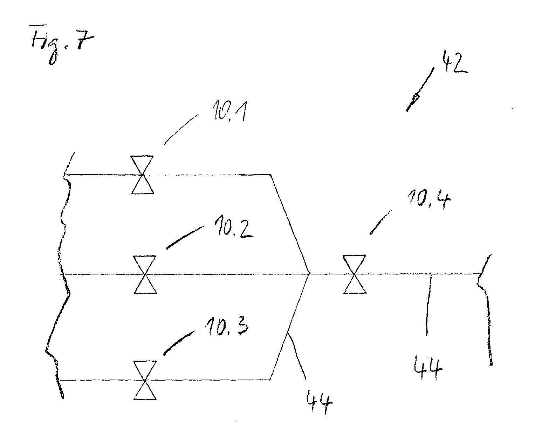

As shown in Fig. 7 it is of course possible to set up multi-arrangements 42 of valves 10 in which a number of inventive valves 10, 10.1, 10.2, 10.3, 10.4 are arranged in a serial and/or parallel flow connection. Flow connections between the valves 10.1, 10.2, 10.3, 10.4 are implemented by means of microfluidic channels 44. In such multi-arrangements 42 the connected valves 10 can have different transition times to form complex time-controlled flow path circuits.

In the production of the inventive valve 10 the valve actuator 22 comprising the swellable material 32 is formed preferably by injection molding, cutting, stamping, sintering or a chip removing process. Highly preferred is a production method in which both, the valve body 14 and the valve actuator 22, made of thermoplastic materials are molded in a multi-component injection molding process, in particular in a two-component injection molding process. Usage of an injection molding process allows a very cost efficient mass production of the inventive valves 10 at a constant high quality level. Alternatively, the valve 10 can be assembled by inserting the separately manufactured valve actuator 22 in the valve body 14. In this case the inserted valve actuator 22 is fixed to the valve body 14 e.g. by means of an adhesive bond or a clamp-connection.

## Claims

1. A microfluidic analytical device comprising a valve (10) and an analytical section, said valve (10) having:
- a fluidic channel (12) having an inlet section (16), an outlet section (18) and an actuating section (20) arranged between said inlet section (16) and said outlet section (18), and
- a valve actuator (22) arranged in said actuating section (20),
in an open state of the valve (10) said valve actuator (22) enables a transfer of a fluid (26) from said inlet section (16) to said outlet section (18) through an actuator-free passage (28) in said actuating section (20), said valve actuator (22) comprises a swellable material (32) which swells upon absorption of an amount of the fluid (26) to be controlled such that in a closed state of the valve (10) said actuator-free passage (28) is closed by the swollen swellable material (32) and thus the transfer of said fluid (26) is blocked, wherein a transition from the open state to the closed state of the valve (10) is controlled automatically and exclusively by contact of said swellable material (32) with said fluid (26).

2. The microfluidic analytical device according to claim 1, wherein said swellable material (32) of the valve (10) comprises a hydrogel, in particular a superabsorbent polymer, preferred a superabsorbent polymer which is applied as a complex matrix, more preferred a poly-acrylic acid derivative.

3. The microfluidic analytical device according to claim 2, wherein said complex matrix comprises a thermoplastic polymer and a superabsorbent polymer.

4. The microfluidic analytical device according to any of claims 1 to 3, wherein said swellable material (32) of the valve (10) being irreversibly bonded to a valve body (14) of the valve (10), in particular to a valve body (14) made of a thermoplastic rigid material selected from the group of polypropylene, polyethylene, polystyrene, polycarbonate and polymethylmethacrylate.

5. The microfluidic analytical device according to any of claims 1 to 4, wherein said swellable material (32) of the valve (10) extends in the open state of the valve (10) into the interior of said fluidic channel (12).

6. The microfluidic analytical device according to any of claims 1 to 4, wherein said swellable material (32) of the valve (10) is arranged in a recess (34, 34.1, 34.2) of said fluidic channel (12) in said actuating section (20) such that an inner actuating wall (36) formed by said swellable material (32) extends in the open state of the valve (10) flush with adjacent walls of the inlet section (16) and/or the outlet section (18), preferably such that in the open state the fluidic channel (12) comprises an at least substantially constant cross section over its entire length.

7. The microfluidic analytical device according to any of claims 1 to 6, wherein a transition time from the open state to the closed state of the valve (10) is predetermined by the swelling properties of the swellable material (32), by the size and the shape of a contact area between said swellable material (32) and said fluid (26) to be controlled, and by the geometry of the actuating section (20).

8. The microfluidic analytical device according to any of claims 1 to 7, wherein said valve (10) is configured as a close-once valve.

9. A valve in microfluidic analytical devices comprising:
- a fluidic channel (12) having an inlet section (16), an outlet section (18) and an actuating section (20) arranged between said inlet section (16) and said outlet section (18), and
- a valve actuator (22) arranged in said actuating section (20),
in an open state of the valve (10) said valve actuator (22) enables a transfer of a fluid (26) from said inlet section (16) to said outlet section (18) through an actuator-free passage (28) in said actuating section (20), said valve actuator (22) comprises a swellable material (32) which swells upon absorption of an amount of the fluid (26) to be controlled such that in a closed state of the valve (10) said actuator-free passage (28) is closed by the swollen swellable material (32) and thus the transfer of said fluid (26) is blocked, wherein a transition from the open state to the closed state of the valve (10) is controlled automatically and exclusively by contact of said swellable material (32) with said fluid (26).

10. A multi-arrangement of valves according to claim 9, wherein a number of valves (10) are arranged in a serial and/or parallel flow connection.

11. The multi-arrangement according to claim 10, wherein the connected valves (10) have different transition times to form complex time-controlled flow path circuits.

12. A microvessel arrangement in a microfluidic analytical device, preferably for nucleic acid testing, more preferably for PCR, having a microvessel (40) into which a liquid (26) is delivered trough microfluidic channels comprising a valve (10) according to any of claims 1 to 9.

13. A method for production of a valve according to claim 9, wherein said valve actuator (22) comprising said swellable material (32) is formed by injection molding, cutting, stamping, sintering or a chip removing process.

14. The method according to claim 13, wherein a valve body (14) of the valve (10) is made of a thermoplastic rigid material and molded together with the valve actuator (14) in a multi-component injection molding process, in particular in a two-component injection molding process.

15. The method according to claim 13, wherein after forming the valve actuator (22) is inserted in and fixed to a valve body (14).
